# FASCICULE DE BREVET EUROPEEN

(11) **EP 3 874 175 B1**
(45) Date de publication et mention de la délivrance du brevet: **03.04.2024**
(21) Numéro de dépôt: 19839373.8
(22) Date de dépôt: 10.12.2019
(51) Int. Cl.: F16D 55/22, F16D 65/00, F16D 65/092, F16D 65/095, F16D 55/00

(54) **ETRIER POUR FREIN A DISQUE COMPRENANT UNE PLAQUE PROTECTRICE VISSEE ET FREIN A DISQUE COMPRENANT UN TEL ETRIER**
BREMSSATTEL FÜR SCHEIBENBREMSE, MIT EINER SCHRAUBBAREN SCHUTZPLATTE, UND SCHEIBENBREMSE MIT SOLCH EINEM BREMSSATTEL
CALLIPER FOR DISC BRAKE, COMPRISING A SCREW-FITTED PROTECTIVE PLATE AND DISC BRAKE COMPRISING SUCH A CALLIPER

(30) Priorité: 20.12.2018 FR 1873548
(43) Date de publication de la demande: 08.09.2021
(73) Titulaire: Hitachi Astemo France, 93700 Drancy (FR)
(72) Inventeur: GUERIN, Florian, 49630 MAZE (FR); CHAIGNEAU, Fabien, 49190 ROCHEFORT SUR LOIRE (FR); CHAMPION, Pascal, 49240 AVRILLE (FR); LABARRE, Xavier, 49250 SAINT GEORGES DU BOIS (FR); KONGO KONDE, Ange, 49100 ANGERS (FR); MONTEGU, Didier, 94420 LE PLESSIS TREVISE (FR)
(74) Mandataire: Brevalex
(86) Numéro de dépôt international: PCT/FR2019/053003
(87) Numéro de publication internationale: WO 2020/128228

(56) Documents cités:
- EP-B1- 1 881 472
- DE-A1- 10 027 783
- JP-A- 2013 108 548
- US-A1- 2009 141 514

## Description

### DOMAINE TECHNIQUE

L'invention se rapporte à un étrier pour frein à disque de véhicule automobile, ainsi qu'à un frein à disque comprenant un tel étrier. Plus précisément, l'invention se rapporte à un étrier comprenant un corps en matériau moulé et une plaque protectrice fixée sur ledit corps.

### ÉTAT DE LA TECHNIQUE ANTÉRIEURE

De manière connue, un étrier pour frein à disque de véhicule automobile comprend un corps en matériau moulé comprenant lui-même une base, une voûte prolongeant la base et une pluralité de doigts prolongeant la voûte, en regard de la base, le corps d'étrier présentant ainsi globalement une forme de U inversé.

Les doigts définissent entre eux un ou plusieurs espaces vides donnant accès à la base du corps où un ou plusieurs actionneurs sont logés en vue d'entraîner un premier patin de glissement du frein à disque en coulissement vers un disque qui est interposé entre la base et les doigts du corps et qui est solidaire en rotation d'une roue de véhicule automobile, un deuxième patin de glissement étant en outre entraîné en coulissement vers le disque par les doigts du corps de l'étrier lui-même monté coulissant.

Ce ou ces espaces vides, qui séparent les doigts, autorisent toutefois l'entrée de poussières entre les doigts et la base, de sorte qu'il a été proposé de fixer une plaque protectrice aux doigts du corps afin de couvrir les doigts et ainsi d'obstruer ce ou ces espaces vides.

Plusieurs solutions ont été proposées pour fixer la plaque protectrice aux doigts du corps d'étrier.

Le document FR 3 045 752 A1 au nom de la Demanderesse propose par exemple de fixer la plaque protectrice au moyen de taquets de blocage rotatifs présentant chacun une extrémité libre en forme de crochet pour coopérer avec une gorge de retenue prévue dans les trous des doigts du corps d'étrier, les taquets de blocage étant en outre excentrés dans ces trous.

Il a aussi été proposé dans le document FR 3 045 750 A1 au nom de la Demanderesse de fixer la plaque protectrice au moyen de plots s'engageant chacun dans un trou correspondant des doigts du corps d'étrier et comportant des ergots radiaux formant griffe de rétention du plot dans le trou.

Or, ces solutions de fixation empêchent un démontage et un remontage aisés de la plaque protectrice une fois cette dernière montée sur le corps d'étrier. Ces solutions restent en outre relativement compliquées à mettre en oeuvre pour le montage de la plaque protectrice sur le corps d'étrier.

Les documents JP 2013 108548 A et DE 100 27 783 A1 montrent des exemples d'étrier pour frein à disque comprenant une plaque protectrice.

### EXPOSÉ DE L'INVENTION

La présente invention a pour objectif de proposer un étrier pour frein à disque comprenant une plaque protectrice qui peut être facilement montée, démontée et remontée sur un corps en matériau moulé de l'étrier.

A cet effet, l'invention propose un étrier pour frein à disque comprenant un corps en matériau moulé et une plaque protectrice qui est fixée par vissage audit corps.

Plus précisément, l'invention a pour objet un étrier pour frein à disque, comprenant un corps en matériau moulé comprenant lui-même :
- une base,
- une voûte prolongeant la base,
- au moins deux doigts prolongeant la voûte et comprenant chacun une face intérieure plane agencée en regard de la base et destinée à coopérer avec un patin de freinage du frein à disque et une face extérieure plane opposée, chacun des doigts étant séparés du ou des doigts lui étant adjacents par un espace vide, les faces intérieure et extérieure formant entre elles un angle non nul,
- une plaque protectrice rapportée sur la face extérieure des doigts, de sorte à couvrir au moins en partie lesdits doigts, de sorte à obstruer le ou au moins un des espaces vides, la plaque protectrice étant fixée par vissage à l'un au moins des doigts, et
- au moins une vis de fixation vissée autour d'un axe de fixation dans des trous ménagés en correspondance dans la plaque protectrice et l'un des doigts du corps, l'axe de fixation étant orienté perpendiculairement à la face intérieure.

Selon des variantes de réalisation qui peuvent être prises ensemble ou séparément :
- la plaque protectrice couvre entièrement les doigts ;
- la plaque protectrice est fixée par vissage à deux doigts du corps ;
- le trou dudit doigt s'étend depuis la face extérieure vers la face intérieure ;
- le trou dudit doigt est traversant ;
- la vis de fixation comprend une tête fraisée logée dans un évidement du trou de la plaque protectrice, de forme complémentaire avec ladite tête fraisée, et un corps fileté coopérant avec un taraudage du trou dudit doigt ;
- la vis de fixation est réalisée en acier inoxydable.

L'invention a aussi pour objet un frein à disque pour véhicule automobile comprenant un étrier tel que précédemment décrit.

### BRÈVE DESCRIPTION DES DESSINS

D'autres aspects, buts, avantages et caractéristiques de l'invention apparaîtront mieux à la lecture de la description détaillée suivante de formes de réalisation préférés de celle-ci, donnée à titre d'exemple non limitatif, et faite en référence aux dessins annexés sur lesquels :
- La figure 1 est une vue en perspective, éclatée, d'un frein à disque comprenant un étrier selon un mode de réalisation de l'invention ;
- La figure 2 est une vue de face du frein à disque illustré à la figure 1 ;
- la figure 3 est une vue en coupe transversale du frein à disque illustré aux figures 1 et 2 ;
- La figure 4 est une vue de détail de la figure 3.

### DESCRIPTION DETAILLEE

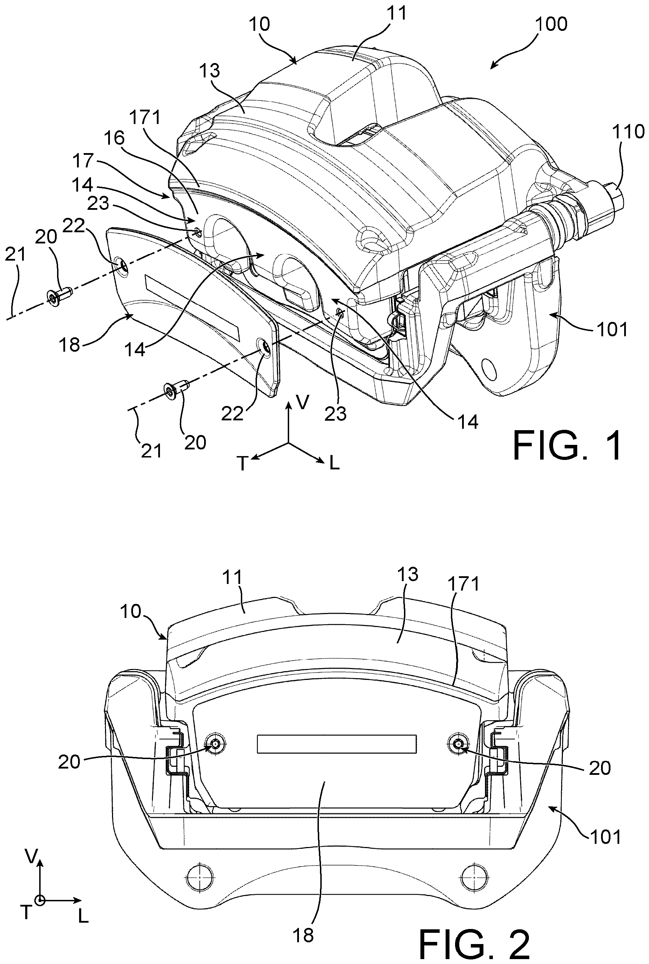

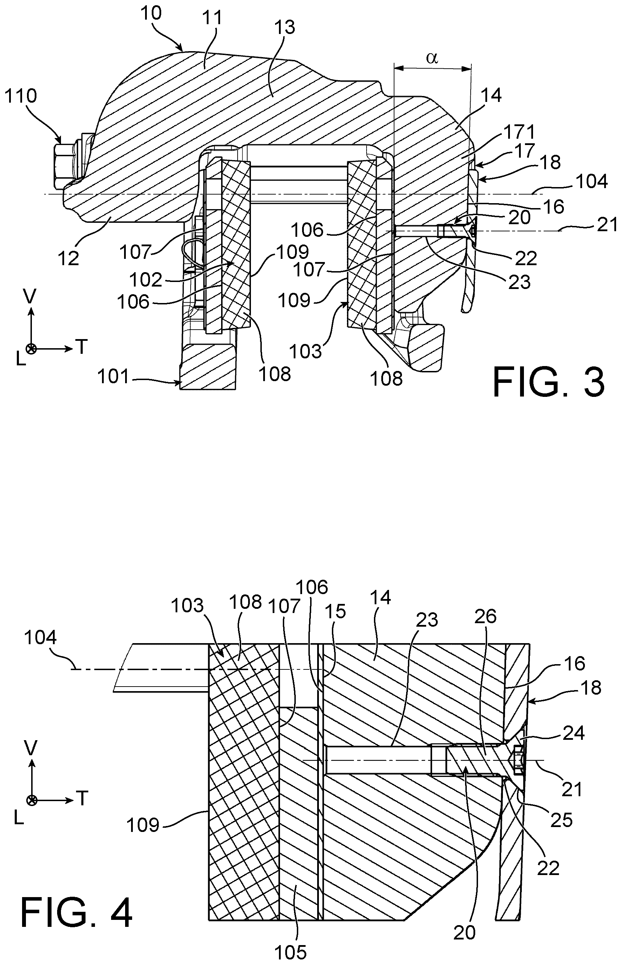

Les figures 1 à 4 montrent un frein à disque 100 pour véhicule automobile comprenant un étrier 10 selon un mode de réalisation de l'invention. Le frein à disque 100 est par exemple un frein à disque dit à « étrier flottant » ou à « étrier coulissant ».

Dans la suite de la description, il est adopté à titre non limitatif des orientations longitudinale, verticale et transversale indiquées par le trièdre L, V, T sur les figures. Les orientations longitudinale L et transversale T sont horizontales dans la représentation des figures 1 à 4.

Le frein à disque 100 comprend un disque (non représenté) monté solidaire en rotation avec une roue (non représentée) du véhicule automobile autour d'un axe de roue (non représenté) transversal. La roue est elle-même montée tournante par rapport à un châssis (non représenté) du véhicule automobile autour de l'axe de roue. Le disque comprend deux faces planes opposées, longitudinales et verticales, orientées perpendiculairement à l'axe de roue.

Le frein à disque 100 comprend en outre un support 101, aussi appelé chape, qui est monté fixe par rapport au châssis du véhicule automobile.

Le frein à disque 100 comprend encore deux patins de freinage 102, 103 opposés, chacun montés coulissant dans la chape 101 suivant un axe de coulissement 104, transversal, parallèle à l'axe de roue, entre une position active et une position inactive. Les patins de freinage 102, 103 sont situés de part et d'autre du disque.

Les patins de freinage 102, 103 comprennent chacun une plaque de support 105 présentant une première et une deuxième faces 106, 107 planes opposées, longitudinales et verticales, perpendiculaires à l'axe de coulissement 104.

La première face 106 des patins de freinage 102, 103 est orientée vers le disque et porte une garniture de frottement 108 présentant une face de frottement 109 plane, longitudinale et verticale, perpendiculaire à l'axe de coulissement 104. La face de frottement 109 de la garniture de frottement 108 de chacun des patins de freinage 102, 103 est destinée à coopérer avec la face du disque située en regard de ladite face de frottement 109.

En position active, la face de frottement 109 de chacune des garnitures de frottement 108 est en appui contre la face du disque avec laquelle ladite face de frottement 109 est en vis-à-vis. En position inactive, la face de frottement 109 de chacune des garnitures de frottement 108 est écartée transversalement de la face du disque avec laquelle ladite face de frottement 109 est en vis-à-vis.

Comme indiqué précédemment, le frein à disque 100 comprend aussi un étrier 10 qui commande le serrage des patins de freinage 102, 103 depuis leur position inactive vers leur position active, lors d'une opération de freinage.

L'étrier 10 comprend un corps 11 en matériau moulé comprenant lui-même une base 12, une voûte 13 prolongeant la base 12 et une pluralité de doigts 14, par exemple deux ou trois doigts 14, prolongeant la voûte 13 en regard de la base 12. Le corps 11 de l'étrier 10 présente ainsi globalement une forme de U inversé.

La voûte 13 s'étend entre la base 12 et les doigts 14 globalement parallèlement à l'axe de roue, au-dessus du disque. La voûte 13 contourne ainsi le disque, en le recouvrant.

La base 12 et les doigts 14 s'étendent radialement depuis la voûte 13 vers l'axe de roue, de part et d'autre du disque et des patins de freinage 102, 103. Les patins de freinage 102, 103 et le disque sont ainsi interposés entre la base 12 et les doigts 14. La base 12 est agencée en regard d'un premier 102 des patins de freinage, tandis que les doigts 14 sont agencés en regard d'un deuxième 103 des patins de freinage.

Les doigts 14 présentent chacun une face intérieure 15 plane située en regard du deuxième patin de freinage 103 et coopérant avec ledit deuxième patin de freinage 103, lorsqu'il coulisse entre sa position inactive et sa position active, ainsi qu'une face extérieure 16 plane opposée.

La face intérieure 15 des doigts 14 est longitudinale et verticale, perpendiculaire à l'axe de roue.

Les faces intérieure et extérieure 15, 16 des doigts 14 forment entre-elles un angle α non nul, notamment compris entre 1 et 2° inclus. Cet angle α correspond à un angle de dépouille permettant de faciliter le démoulage du corps 11 de l'étrier 10, lors de sa fabrication. Cet angle α est de préférence égal à 1.5° ± 0.5°.

La face extérieure 16 des doigts 14 définit par exemple un renfoncement 17 dans le corps 11 de l'étrier 10, notamment par rapport à la voûte 13. Pour cela, la voûte 13 est par exemple raccordée à la face extérieure 16 des doigts 14 par l'intermédiaire d'un bourrelet 171 s'étendant depuis le corps 11 globalement parallèlement par rapport à l'axe de roue, la face extérieure 16 étant ainsi en retrait par rapport à un sommet du bourrelet 171.

Le corps 11 de l'étrier 10 est par exemple monté coulissant par rapport à la chape 101 par l'intermédiaire de deux colonnettes de guidage 110 qui sont parallèles aux axes de coulissement 104 des patins de freinage 102, 103 et qui sont chacune reçues en coulissement dans un alésage (non représenté) associé de la chape 101.

La base 12 porte en outre au moins un actionneur, par exemple un piston hydraulique ou mécanique, conçu d'une part pour entraîner le premier patin de freinage 102 en coulissement depuis sa position inactive vers sa position active, et d'autre part pour entraîner, par réaction, l'étrier 10 en coulissement dans un sens opposé par rapport à celui du premier patin de freinage 102, de sorte que l'étrier 10 entraîne lui-même, au moyen des doigts 14 et de leur face intérieure 15, le deuxième patin de freinage 103 en coulissement depuis sa position inactive vers sa position active.

De cette manière, l'actionneur permet de resserrer les premier et deuxième patins de freinage 102, 103 l'un vers l'autre et d'appliquer leur face de frottement 109 contre les faces opposées du disque. Les premier et deuxième patins de freinage 102, 103 permettent ainsi, par friction contre les faces opposées du disque, de diminuer la vitesse de rotation de la roue et ainsi de freiner le véhicule automobile.

Le corps 11 de l'étrier 10 comprend par exemple deux doigts 14, lorsque la base 12 loge un actionneur. Le corps 11 de l'étrier 10 comprend par exemple trois doigts 14, lorsque la base 12 loge deux actionneurs.

L'étrier 10 comprend encore une plaque protectrice 18 rapportée sur la face extérieure 16 des doigts 14 du corps 11. La plaque protectrice 18 couvre ou encore cache en tout ou partie les doigts 14 du corps 11. La plaque protectrice 18 permet ainsi d'obstruer un ou des espaces vides 19 définis entre deux doigts 14 adjacents, afin d'empêcher l'entrée de poussières par ces espaces vides 19.

La plaque protectrice 18 est en outre fixée par vissage à l'un au moins des doigts 14 du corps 11.

De cette manière, la fixation de la plaque protectrice 18 est particulièrement simple à mettre en oeuvre. La plaque protectrice 18 peut ainsi être montée, démontée et remontée très facilement. Le vissage permet encore de fixer la plaque protectrice 18 au corps 11 d'étrier 10 quelles que soient sa forme ou encore sa géométrie. La fixation par vissage présente aussi les avantages d'être fiable et peu coûteuse.

La plaque protectrice 18 est par exemple en contact avec ou encore en appui contre la face extérieure 16 des doigts 14 du corps 11. Cela permet de réduire les vibrations de la plaque protectrice 18 et ainsi le bruit associé à ces vibrations.

Le renfoncement 17 du corps 11, qui est défini par la deuxième face 16 des doigts 14, accueille par exemple la plaque protectrice 18.

La plaque protectrice 18 comprend par exemple une première partie en contact avec la face extérieure 16 des doigts 14 du corps 11 et une deuxième partie qui prolonge la première partie dans une direction opposée à la voûte 13, notamment verticale, et qui forme une extrémité libre de la plaque protectrice 18. L'extrémité libre de la plaque protection 18 est ainsi agencée à distance de l'étrier 10, notamment des doigts 14.

La deuxième partie de la plaque protectrice 18 est par exemple inclinée par rapport à la première partie, en direction de l'étrier 10, notamment des doigts 14, de sorte à assurer un jeu minimal entre la plaque protectrice 18 et un calibre de roue (non représenté) et ainsi éviter toute interférence entre la plaque protectrice 18 et le calibre de la roue. En variante (non représentée), les première et deuxième parties de la plaque protectrice 18 sont droites l'une par rapport à l'autre, notamment lorsque la forme du calibre de roue le permet.

La plaque protectrice 18 est fixée par vissage à deux doigts 14 du corps 11. Lorsque le corps 11 de l'étrier 10 comprend trois doigts 14 ou plus, la plaque protectrice 18 est fixée par vissage aux deux doigts 14 d'extrémité entre lesquels le ou les autres doigts 14 sont interposés.

Seule la fixation par vissage de la plaque protectrice 18 à l'un des doigts 14 du corps 11 de l'étrier 10 sera décrite par la suite, cette description étant applicable à la fixation par vissage de la plaque protectrice 18 à un autre doigt 14 dudit corps 11.

Pour fixer par vissage la plaque protectrice 18 à l'un des doigts 14 du corps 11 de l'étrier 10, l'étrier 10 comprend en outre une vis de fixation 20 vissée autour d'un axe de fixation 21 dans des trous 22, 23 ménagés en correspondance dans la plaque protectrice 18 et le doigt 14. Le trou 22 de la plaque protectrice 18 et le trou ou alésage 23 du doigt 14 sont ainsi tous deux centrés sur l'axe de fixation 21.

Le trou 23 du doigt 14 s'étend depuis la face extérieure 16 vers la face intérieure 15 du doigt 14. Le trou 23 du doigt 14 est par exemple traversant, ce qui permet d'évacuer les copeaux de matière lors du perçage du trou 23 du doigt 14.

La vis de fixation 20 comprend par exemple une tête fraisée 24 logée dans un évidement 25 du trou 22 de la plaque protectrice 18, de forme complémentaire avec ladite tête fraisée 24 et lui-même centré sur l'axe de fixation 21, et un corps fileté 26 coopérant avec un taraudage du trou 23 du doigt 14.

L'évidement 25 permet d'éviter que la tête fraisée 24 de la vis de fixation 20 dépasse de la plaque protectrice 18.

L'évidement 25 du trou 22 de la plaque protectrice 18 présente une forme tronconique s'étendant autour de l'axe de fixation 21. Une surface tronconique de l'évidement 25 forme par exemple sensiblement un angle de 45° avec l'axe de fixation 21 sur toute sa circonférence.

L'évidement 25 est par exemple réalisé par emboutissage de la plaque protectrice 18.

Le corps fileté 26 s'étend par exemple en partie dans le trou 22 de la plaque protectrice 18 et en partie dans le trou 23 du doigt 14 avec lequel il coopère.

Le trou 23 du doigt 14 n'est par exemple qu'en partie taraudé, notamment lorsque ledit trou 23 est traversant.

L'axe de fixation 21 est orienté perpendiculairement à la face intérieure 15 du doigt 14. Ainsi, lorsque les faces intérieure et extérieure 15, 16 des doigts 14 forment entre-elles un angle α non nul, la vis de fixation 20 est vissée en biais par rapport à la face extérieure 16 du doigt 14. Elle est aussi vissée en biais par rapport à la plaque protectrice 18. Cela permet de simplifier l'usinage de l'étrier 10, le même référentiel pouvant être utilisé pour toutes les opérations d'usinage de l'étrier 10.

La vis de fixation 20 est par exemple réalisée en acier inoxydable. La vis de fixation 20 est ainsi résistante à la corrosion.

En variante, la vis de fixation 20 est réalisée en acier de classe de résistance 8.8. La vis de fixation 20 est par exemple aussi traitée thermiquement.

En variante (non représentée), l'étrier comprend plusieurs plaques protectrices 18. Par exemple, lorsque le corps 11 de l'étrier 10 comprend trois ou davantage de doigts (14), les plaques protectrices 18 obstruent chacun l'un des espaces vides (19) séparant deux doigts (14) adjacents. La description détaillée ci-dessus reste applicable à cette variante.

L'étrier 10 et le frein à disque 100 décrits ci-dessus sont particulièrement avantageux car ils permettent d'éviter, au moyen de la plaque protectrice 18, l'entrée de poussières via le ou les espaces vides 19 qui séparent les doigts 14 du corps 11, sans toutefois compliquer la fabrication de l'étrier 10 et du frein à disque 100 en fixant la plaque protectrice 18 aux doigts 14 par vissage.

### Nomenclature

100 frein à disque
101 support ou chape
102 premier patin de freinage
103 deuxième patin de freinage
104 axe de coulissement
105 plaque de support
106 face intérieure
107 face extérieure
108 garniture de frottement
109 face de frottement
110 colonnette de guidage
10 étrier
11 corps
12 base
13 voûte
14 doigts
15 face intérieure
16 face extérieure
17 renfoncement
171 bourrelet
18 plaque protectrice
19 espace vide
20 vis de fixation
21 axe de fixation
22 trou de la plaque protectrice
23 trou des doigts
24 tête fraisée
25 évidement
26 corps fileté

## Revendications

1. Etrier (10) pour frein à disque (100), comprenant un corps (11) en matériau moulé comprenant lui-même :
- une base (12),
- une voûte (13) prolongeant la base (12),
- au moins deux doigts (14) prolongeant la voûte (13) et comprenant chacun une face intérieure (15) plane agencée en regard de la base (12) et destinée à coopérer avec un patin de freinage (103) du frein à disque (100) et une face extérieure (16) plane opposée, chacun des doigts (14) étant séparés du ou des doigts (14) lui étant adjacents par un espace vide (19), les faces intérieure et extérieure (15, 16) formant entre elles un angle (α) non nul, et
- une plaque protectrice (18) rapportée sur la face extérieure (16) des doigts (14), de sorte à couvrir lesdits doigts (14) au moins en partie, de sorte à obstruer le ou au moins un des espaces vides (19), la plaque protectrice (18) étant fixée par vissage à l'un au moins des doigts (14),
- au moins une vis de fixation (20) vissée autour d'un axe de fixation (21) dans des trous (22, 23) ménagés en correspondance dans la plaque protectrice (18) et l'un des doigts (14) du corps (11),
l'étrier (10) étant **caractérisé en ce que** l'axe de fixation (21) est orienté perpendiculairement à la face intérieure (15).

2. Etrier (10) selon la revendication 1, dans lequel la plaque protectrice (18) couvre entièrement les doigts (14).

3. Etrier (10) selon la revendication 1 ou la revendication 2, dans lequel la plaque protectrice (18) est fixée par vissage à deux doigts (14) du corps (11).

4. Etrier (10) selon l'une des revendications 1 à 3, dans lequel le trou (23) dudit doigt (14) s'étend depuis la face extérieure (16) vers la face intérieure (15).

5. Etrier (10) selon l'une des revendications 1 à 4, dans lequel le trou (23) dudit doigt (14) est traversant.

6. Etrier (10) selon l'une des revendications 1 à 5, dans lequel la vis de fixation (20) comprend une tête fraisée (24) logée dans un évidement (25) du trou (23) de la plaque protectrice (18), de forme complémentaire avec ladite tête fraisée (24), et un corps fileté (26) coopérant avec un taraudage du trou (22) dudit doigt (14).

7. Etrier (10) selon l'une des revendications 1 à 6, dans lequel la vis de fixation (20) est réalisée en acier inoxydable.

8. Frein à disque (100) pour véhicule automobile comprenant un étrier (10) selon l'une des revendications 1 à 7.

## Patentansprüche

1. Bremssattel (10) für eine Scheibenbremse (100), umfassend einen Körper (11) aus einem geformten Werkstoff, welcher selbst umfasst:
- einen Sockel (12),
- eine Wölbung (13), welche den Sockel (12) ergänzt,
- mindestens zwei Finger (14), welche die Wölbung (13) ergänzen, und jeweils eine ebene Innenfläche (15) umfassen, die gegenüber dem Sockel (12) angeordnet ist, und dazu bestimmt ist, mit einem Bremsbelag (103) der Scheibenbremse (100) zusammenzuwirken, und eine gegenüberliegende ebene Außenfläche (16), wobei jeder der Finger (14) von dem oder den an ihn angrenzenden Finger(n) (14) durch einen Leerraum (19) getrennt ist, wobei die Innen- und Außenfläche (15, 16) zwischen sich einen Winkel (*α*) ungleich null bilden, und
- eine Schutzplatte (18), die an der Außenfläche (16) der Finger (14) beigebracht ist, um die Finger (14) mindestens teilweise abzudecken, um den oder mindestens einen der Leerräume (19) zu verstopfen, wobei die Schutzplatte (18) durch Verschrauben an mindestens einem der Finger (14) befestigt ist,
- mindestens eine Befestigungsschraube (20), die um eine Befestigungsachse (21) herum in Löcher (22, 23) geschraubt wird, die entsprechend in die Schutzplatte (18) und einen der Finger (14) des Körpers (11) eingearbeitet sind,
wobei der Bremssattel (10) **dadurch gekennzeichnet ist, dass** die Befestigungsachse (21) senkrecht zur Innenfläche (15) ausgerichtet ist.

2. Bremssattel (10) nach Anspruch 1, wobei die Schutzplatte (18) die Finger (14) vollständig abdeckt.

3. Bremssattel (10) nach Anspruch 1 oder Anspruch 2, wobei die Schutzplatte (18) durch Verschrauben an zwei Fingern (14) des Körpers (11) befestigt ist.

4. Bremssattel (10) nach einem der Ansprüche 1 bis 3, wobei sich das Loch (23) des Fingers (14) aus der Außenfläche (16) zur Innenfläche (15) erstreckt.

5. Bremssattel (10) nach einem der Ansprüche 1 bis 4, wobei das Loch (23) des Fingers (14) durchgehend ist.

6. Bremssattel (10) nach einem der Ansprüche 1 bis 5, wobei die Befestigungsschraube (20) einen Senkkopf (24) umfasst, der in einer Ausnehmung (25) des Loches (23) der Schutzplatte (18) in ergänzender Form zum Senkkopf (24) versenkt ist, und einen Gewindekörper (26), der mit einem Innengewinde des Loches (22) des Fingers (14) zusammenwirkt.

7. Bremssattel (10) nach einem der Ansprüche 1 bis 6, wobei die Befestigungsschraube (20) aus nichtrostendem Stahl gefertigt ist.

8. Scheibenbremse (100) für ein Kraftfahrzeug, umfassend einen Bremssattel (10) nach einem der Ansprüche 1 bis 7.

## Claims

1. A calliper (10) for a disc brake (100), comprising a body (11) made of a moulded material itself comprising:
- a base (12),
- an arch (13) extending the base (12),
- at least two fingers (14) extending the arch (13) and each comprising a planar internal face (15) arranged opposite the base (12) and intended to cooperate with a brake pad (103) of the disc brake (100) and an opposite planar external face (16), each of the fingers (14) being separated from the finger(s) (14) adjacent thereto by an empty space (19), the internal and external faces (15, 16) forming a non-zero angle (α) therebetween, and
- a protective plate (18) affixed onto the external face (16) of the fingers (14), so as to cover said fingers (14) at least partially, so as to obstruct the or at least one of the empty spaces (19), the protective plate (18) being fastened by screwing to at least one of the fingers (14),
- at least one fastening screw (20) screwed around a fastening axis (21) into holes (22, 23) formed in correspondence in the protective plate (18) and one of the fingers (14) of the body (11),
the calliper (10) being **characterised in that** the fastening axis (21) is directed perpendicularly to the internal face (15).

2. The calliper (10) according to claim 1, wherein the protective plate (18) entirely covers the fingers (14).

3. The calliper (10) according to claim 1 or claim 2, wherein the protective plate (18) is fastened by screwing to two fingers (14) of the body (11).

4. The calliper (10) according to one of claims 1 to 3, wherein the hole (23) of said finger (14) extends from the external face (16) towards the internal face (15).

5. The calliper (10) according to one of claims 1 to 4, wherein the hole (23) of said finger (14) is open-through.

6. The calliper (10) according to one of claims 1 to 5, wherein the fastening screw (20) comprises a countersunk head (24) accommodated in a recess (25) of the hole (23) of the protective plate (18), with a shape complementary with said countersunk head (24), and a tapped body (26) cooperating with a thread of the hole (22) of said finger (14).

7. The calliper (10) according to one of claims 1 to 6, wherein the fastening screw (20) is made of stainless steel.

8. A disc brake (100) for a motor vehicle comprising a calliper (10) according to one of claims 1 to 7.
